# FASCICULE DE BREVET EUROPEEN

(11) **EP 1 539 519 B1**
(45) Date de publication et mention de la délivrance du brevet: **24.02.2010**
(21) Numéro de dépôt: 03753413.8
(22) Date de dépôt: 12.09.2003
(51) Int. Cl.: B60K 15/04, B67D 7/06, B67D 7/42

(54) **GUIDE POUR PISTOLET DISTRIBUTEUR DE CARBURANT AVEC DISPOSITIF D'ETANCHEITE ET DE SECURITE**
FÜHRUNG EINES KRAFTSTOFF-FÜLLSTÜTZENS MIT DICHTUNGS- UND SICHERHEITSVORRICHTUNG
GUIDE FOR FUEL FILLING NOZZLE WITH SEALING AND SAFETY DEVICE

(30) Priorité: 13.09.2002 FR 0211465
(43) Date de publication de la demande: 15.06.2005
(73) Titulaire: Inergy Automotive Systems Research (Société Anonyme), 1120 Bruxelles (BE)
(72) Inventeur: GANACHAUD, Patrick, F-53000 Laval (FR); COVET, Jacques, F-53200 Gennes Sur Glaize (FR)
(74) Mandataire: Jacques, Philippe
(86) Numéro de dépôt international: PCT/EP2003/010193
(87) Numéro de publication internationale: WO 2004/024488

(56) Documents cités:
- US-A- 3 334 779
- US-A- 3 903 942
- US-A- 4 598 741
- US-A- 4 887 578
- US-A- 5 605 177
- US-A- 5 775 392
- US-A- 5 954 367
- US-B1- 6 364 145

## Description

La présente invention concerne un guide pour pistolet distributeur de carburant incorporant un dispositif d'étanchéité et de sécurité un dispositif d'étanchéité et de sécurité.

De nombreux systèmes de sécurité relatifs à des réservoirs à carburant ont été décrits et s'adressent généralement à la résolution des problèmes liés au dégazage du réservoir pendant son remplissage, ainsi que sa mise à l'air en période normale de repos et de fonctionnement du moteur consommant ce carburant. A ces problèmes s'ajoute la nécessité de plus en plus impérieuse, en vue du respect de l'environnement, de récupérer les vapeurs dégagées lors des opérations citées ci-dessus en évitant au maximum les fuites vers l'atmosphère.

Divers systèmes réalisant une étanchéité plus ou moins complète entre un pistolet distributeur et un orifice de remplissage d'un réservoir sont connus. Le brevet US-3,334,779, par exemple, divulgue un diaphragme en matière souple fendue en trois secteurs. L'enfoncement du pistolet ouvre le diaphragme et écarte les secteurs sur la paroi intérieure de la tubulure de remplissage où ils font office de joint d'étanchéité pour le pistolet distributeur.

Le document US-A-4,887,578 montre la préambule de la revendication indépendante 1.

Les systèmes connus présentent toutefois un certain nombre de désavantages :
- création d'une surpression dans le réservoir occasionnant des retours de liquide dans la tubulure de remplissage,
- absence de récupération des vapeurs de liquide par le pistolet,
- pas de protection en cas de surpression brutale importante dans le réservoir.

L'invention a pour but de remédier aux inconvénients des systèmes connus et de fournir un système qui permette la gestion des accroissements rapides de pression dans le réservoir tout en maintenant un encombrement réduit du système et un coût bas du même ordre de grandeur ou inférieur à celui des systèmes classiques existant à l'heure actuelle.

A cet effet l'invention concerne un dispositif d'étanchéité et de sécurité en matériau élastomère souple pour le remplissage d'un corps creux avec un liquide au moyen d'un pistolet distributeur comprenant au moins un joint annulaire destiné à entourer le pistolet et à s'opposer à la sortie des gaz hors du corps creux, selon lequel il comprend aussi au moins une soupape qui n'est susceptible de s'ouvrir, en cas de surpression exagérée dans le corps creux, que vers l'atmosphère extérieure de manière à créer un passage permettant l'échappement de liquide et/ou de gaz de l'intérieur du corps creux vers cette atmosphère extérieure.

L'invention s'adresse à un dispositif d'étanchéité et de sécurité. Par dispositif d'étanchéité, on entend désigner tout dispositif capable d'isoler l'atmosphère intérieure d'un corps creux de l'atmosphère ambiante. Par le terme "isoler", on entend désigner ici : n'admettre qu'une fuite légère lors de l'utilisation du dispositif. Le niveau admissible de fuite est réglé lors du montage du dispositif d'étanchéité et de sécurité pour que, sous une pression de test de 40 mbar par rapport à la pression atmosphérique, la fuite ne dépasse pas 201/heure et, de préférence, pas 12 l/heure.

Le dispositif selon l'invention est aussi un dispositif de sécurité, c'est-à-dire un système qui permette le stockage et la manipulation d'un liquide dans un réservoir de manière sûre pour l'utilisateur comme pour l'environnement. Un tel système met l'utilisateur à l'abri de toute situation hasardeuse, en particulier les risques d'explosion, d'implosion, de combustion ou de pollution quelconques, tout en maintenant l'environnement extérieur exempt de toute fuite de liquide ou émanation de gaz indésirables.

Selon l'invention, le dispositif d'étanchéité et de sécurité est réalisé en matériau élastomère souple, c'est-à-dire pouvant se déformer de manière élastique sous l'influence d'une sollicitation mécanique.

Toutes les catégories de matériaux élastomères conviennent, comme par exemple, les élastomères naturels tels que le caoutchouc et les nombreux élastomères de synthèse. Parmi ces derniers, conviennent bien les caoutchoucs artificiels, les polymères et copolymères de synthèse présentant des propriétés élastomères. Un mélange de plusieurs polymères et/ou copolymères peut aussi convenir, pour autant qu'au moins un des composants du mélange présente des propriétés élastomères. Des exemples de tels matériaux sont les résines butadiène-styrène, éventuellement associées à un troisième composant, les polymères thermoplastiques tels que les polyoléfines élastomères ou les copolymères d'oléfines élastomères.

Le dispositif selon l'invention est destiné au remplissage d'un corps creux. Par corps creux, on entend toute structure dont la surface présente au moins une partie vide ou concave. De préférence le corps creux désigne ici une structure fermée destinée à contenir un liquide et/ou un gaz. Particulièrement préférés sont les cuves et les réservoirs. Les corps creux selon l'invention sont particulièrement bien adaptés à leur utilisation comme réservoir à carburant, notamment ceux présents sur - ou destinés à - équiper les véhicules automobiles.

Le liquide de remplissage du corps creux peut être tout type de liquide inorganique et/ou organique. En particulier, il peut contenir au moins un corps dissous.

Le dispositif selon l'invention est bien adapté au remplissage de réservoirs avec des liquides dont la volatilité à température ambiante est supérieure à celles de l'eau et des solutions aqueuses. Il est particulièrement bien adapté au remplissage de réservoirs à carburant au moyen d'un carburant liquide tel qu'une essence ou du gasoil.

Selon l'invention, le remplissage du corps creux s'effectue au moyen d'un pistolet distributeur de liquide. Un tel pistolet permet de contrôler l'arrivée et le débit de liquide entrant dans le corps creux. Il est généralement doté aussi d'un système de déclenchement automatique et de l'arrêt du débit de liquide à l'approche du plein du corps creux.

Selon l'invention, le dispositif comprend au moins un joint annulaire destiné à entourer le pistolet. Ce joint annulaire comprend au moins une lèvre en matériau élastomère se repliant sur la surface extérieure du tuyau du bec du pistolet. Un dispositif à deux lèvres annulaires a donné de bons résultats.

Le joint annulaire est destiné à s'opposer à la sortie des gaz hors du corps creux. Il est entendu qu'une fuite minimale définie plus haut en rapport avec l'étanchéité est admise.

Selon l'invention, le dispositif d'étanchéité comprend aussi au moins une soupape qui n'est susceptible de s'ouvrir, en cas de surpression exagérée dans le corps creux, que vers l'atmosphère extérieure de manière à créer un passage permettant l'échappement de liquide et/ou de gaz de l'intérieur du corps creux vers cette atmosphère extérieure.

Par surpression exagérée, on entend une surpression accidentelle survenant rapidement, telle que celle qui se produit en cas de défaillance du système de déclenchement automatique du pistolet lors du remplissage. Une telle surpression exagérée peut aussi survenir dans les situations anormales extrêmes telles que les montées en température rapides et élevées, en cas d'incendie ou d'explosion, par exemple. La fonction de cette soupape est de préserver l'intégrité du corps creux et d'éviter tout éclatement ou dégradation du corps creux lors de pareilles situations accidentelles.

La soupape crée, en s'ouvrant, un passage vers l'atmosphère extérieure au voisinage immédiat du corps creux.

Une forme de réalisation particulière de la soupape selon l'invention est celle d'une lèvre annulaire en matériau élastomère. Dans cette forme de réalisation, une extrémité de la lèvre peut être solidaire du dispositif d'étanchéité et son autre extrémité peut s'appuyer à force élastique sur un élément rigide qui borde le passage. Par le terme rigide, on entend l'état d'un matériau qui n'est pas élastique.

De manière préférée, la lèvre en position ouverte découvre un orifice qui permet l'écoulement du liquide et/ou du gaz. Cet orifice peut être percé dans une partie rigide voisine du passage. De préférence, l'orifice permet un écoulement du liquide et/ou du gaz dans une direction initiale perpendiculaire à l'axe du pistolet distributeur.

De préférence aussi, l'élément rigide borde l'orifice. De manière la plus préférée, cet élément rigide délimite l'orifice, en en constituant la totalité de sa circonférence.

Une autre forme de réalisation particulière de la soupape selon l'invention est celle d'un clapet anti-retour. Le clapet peut être indépendant du joint annulaire. Il est avantageusement situé à proximité du pistolet distributeur, lorsque celui-ci est engagé dans le dispositif d'étanchéité et de sécurité conforme à l'invention. Toutes les formes de clapet anti-retour qui sont compatibles avec l'environnement du passage peuvent être utilisées.

Un exemple de clapet anti-retour convenant bien est celui d'une membrane en matériau élastomère en forme de parapluie renversé.

Une variante intéressante au dispositif selon l'invention est celle où le dispositif comprend en outre, du côté du corps creux, un obturateur en matériau élastomère. L'obturateur est disposé en aval du dispositif, dans la direction d'introduction du pistolet distributeur. Il peut prendre toute forme compatible avec le dispositif d'étanchéité et de sécurité. Un exemple ayant donné de bons résultats est un obturateur formé par un diaphragme en matériau élastomère, tel que celui formé par un disque d'un tel matériau fendu en au moins quatre secteurs.

Le dispositif selon l'invention convient tout particulièrement pour des corps creux qui sont des réservoirs, par exemple des réservoirs à carburant, tels que ceux que l'on rencontre sur les véhicules automobiles.

Lorsque les corps creux sont de tels réservoirs à carburant, le dispositif selon l'invention peut avantageusement être intégré dans un guide pour pistolet à carburant. Un tel guide est généralement inséré dans le haut d'une tubulure de remplissage d'un réservoir à carburant. Il a pour fonction de positionner correctement le pistolet dans le haut de la tubulure pour permettre un remplissage exempt de problèmes. Accessoirement, il est généralement muni aussi d'un dispositif de détrompage mécanique en vue d'éviter tout remplissage avec une qualité de carburant qui ne serait pas adaptée pour le véhicule concerné. Le guide peut être réalisé en différent matériaux, dont les métaux et les matières plastiques rigides. De préférence, il est en matière plastique rigide.

Dans cette dernière forme de réalisation dans laquelle le dispositif selon l'invention est une partie d'un guide pour pistolet, le guide peut lui-même être intégré dans un système à carburant plus global qui comprend un réservoir et un clapet de dégazage et de mise à l'air. Le dispositif convient bien lorsque le système global à carburant comprend en outre une canalisation de respiration des vapeurs et de fixation du niveau maximum du liquide dans le réservoir. Cette canalisation relie la partie haute du réservoir à la partie supérieure de la tubulure de remplissage, en aval du dispositif d'étanchéité, du côté du réservoir. Dans ce système à carburant, le clapet de dégazage et de mise à l'air est souvent un clapet à flotteur. La ligne de flottaison du flotteur est généralement réglée pour que le clapet ne soit ouvert qu'en deux circonstances, à savoir lorsque le réservoir est incliné au-delà d'une limite prédéterminée, voire complètement retourné et pendant un mouvement transitoire du carburant dont l'ampleur dépasse une valeur prédéterminée.

Dans ce système à carburant, la canalisation de respiration des vapeurs et de fixation du niveau maximum qui relie la partie haute du réservoir à la partie supérieure de la tubulure de remplissage peut être située en grande partie à l'extérieur du volume du réservoir et de celui de la tubulure de remplissage. Dans ce cas, cette canalisation pénètre, à l'une de ses extrémités, la paroi supérieure du réservoir et plonge dans la partie haute de celui-ci. Elle pénètre aussi à son autre extrémité, la tubulure de remplissage, en aval du système d'étanchéité.

En variante, la canalisation de respiration des vapeurs et de fixation du niveau maximum peut être située en totalité à l'intérieur du volume du réservoir et de celui de la tubulure de remplissage.

Dans les deux variantes décrites ci-dessus, la canalisation de respiration des vapeurs et de fixation du niveau maximum possède de préférence un diamètre suffisant pour permettre l'aspiration totale des gaz présents dans le réservoir par le pistolet.

Une autre variante compatible avec les précédentes, est celle où la canalisation de respiration des vapeurs et de fixation du niveau maximum débouche dans la partie haute du réservoir via un clapet à flotteur, différent du clapet de dégazage et de mise à l'air, qui ferme le passage lorsque le niveau maximum de liquide est atteint dans le réservoir.

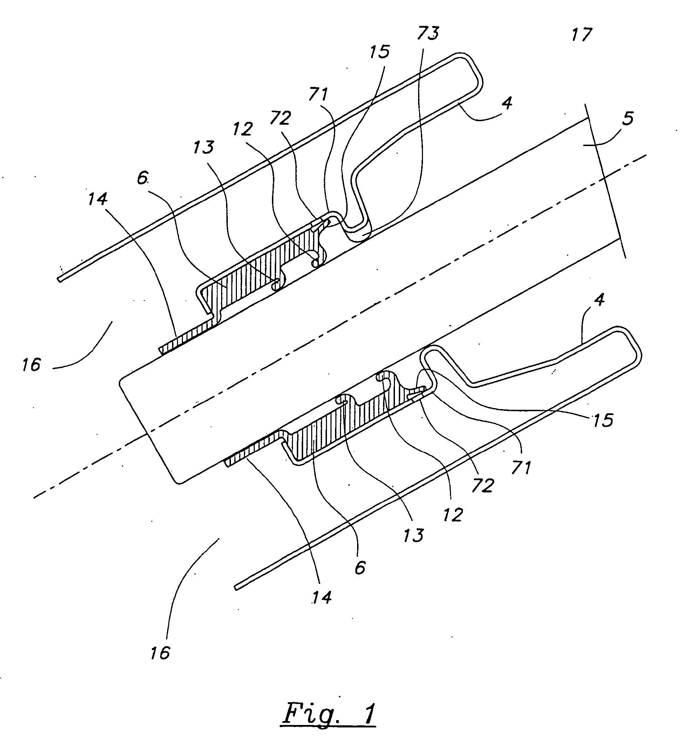

Les figures 1 à 4 qui suivent ont pour but d'illustrer l'invention, sans en limiter en aucune façon sa portée.

La figure 1 illustre une coupe dans un dispositif d'étanchéité et de sécurité (6) en matériau élastomère intégré dans un guide (4) en polyéthylène haute densité (PEHD). Un pistolet distributeur (5) est inséré dans le guide (4) et traverse le dispositif (6). Un joint annulaire comprenant deux lèvres (12, 13) en matériau élastomère qui se replient sur la surface extérieure du tuyau du bec du pistolet (5) assure l'étanchéité. Un obturateur en forme de diaphragme (14) prolonge le dispositif (6) vers l'aval et est illustré en position ouverte par l'enfoncement du pistolet (5).

Une soupape ayant la forme d'une lèvre annulaire (15) en matériau élastomère est solidaire du dispositif (6) et le prolonge vers l'amont. La lèvre annulaire (15) repose en position normale fermée sur un bord rigide (71) formé d'une partie du guide (4). Elle recouvre un orifice annulaire (72) percé dans une partie rigide du guide (4). La forme du guide (4) au voisinage du pistolet en amont du dispositif d'étanchéité et de sécurité (6) prévoit un espace (73) pour l'échappement du gaz et/ou du liquide.

En cas de surpression accidentelle exagérée à l'intérieur (16) de la tubulure de remplissage, la lèvre (15) s'ouvre et découvre l'orifice (71), permettant ainsi la création d'un passage pour les gaz et/ou le liquide dans une direction initiale perpendiculaire à celle de l'axe du pistolet (5) qui s'échappent ensuite par l'espace (73) pour finalement parvenir à l'atmosphère extérieure (17) surmontant le haut du guide (4).

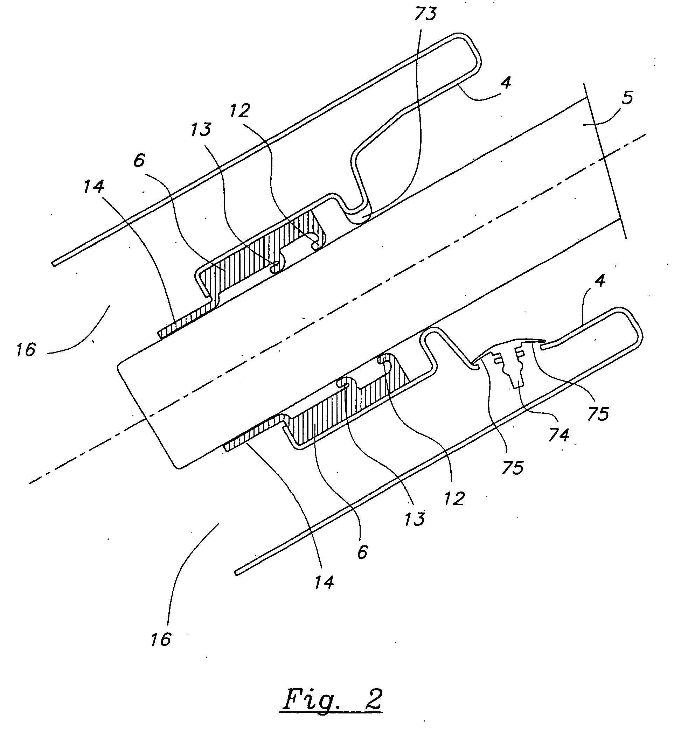

La figure 2 illustre une coupe dans une autre variante d'un dispositif d'étanchéité et de sécurité (6) conforme à l'invention. Dans cette variante, l'orifice et la lèvre annulaire de la figure 1 ont été remplacés par une soupape matérialisée par un clapet anti-retour (74) en forme de parapluie renversé en matériau élastomère. L'extrémité de la circonférence du parapluie (75) agit comme une lèvre circulaire souple qui s'ouvre sous l'influence d'une pression à l'intérieur (16) de la tubulure trop élevée.

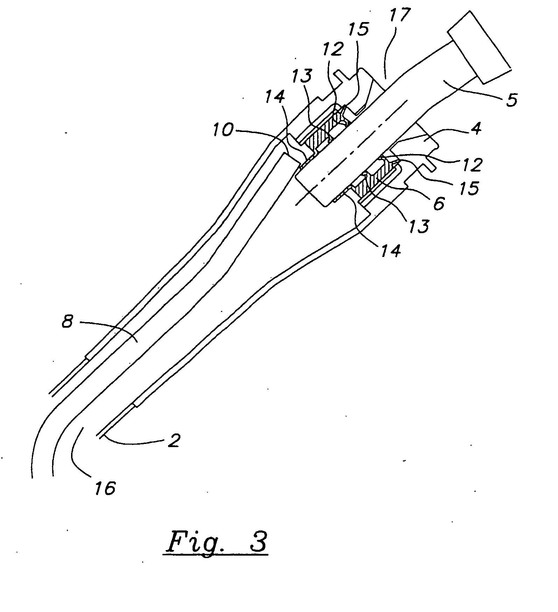

La figure 3 montre une coupe dans le haut d'une tubulure de remplissage (2) comprenant le dispositif d'étanchéité et de sécurité (6) conforme à l'invention. On y distingue une canalisation (8) de respiration des vapeurs disposée à l'intérieur de la tubulure (2).

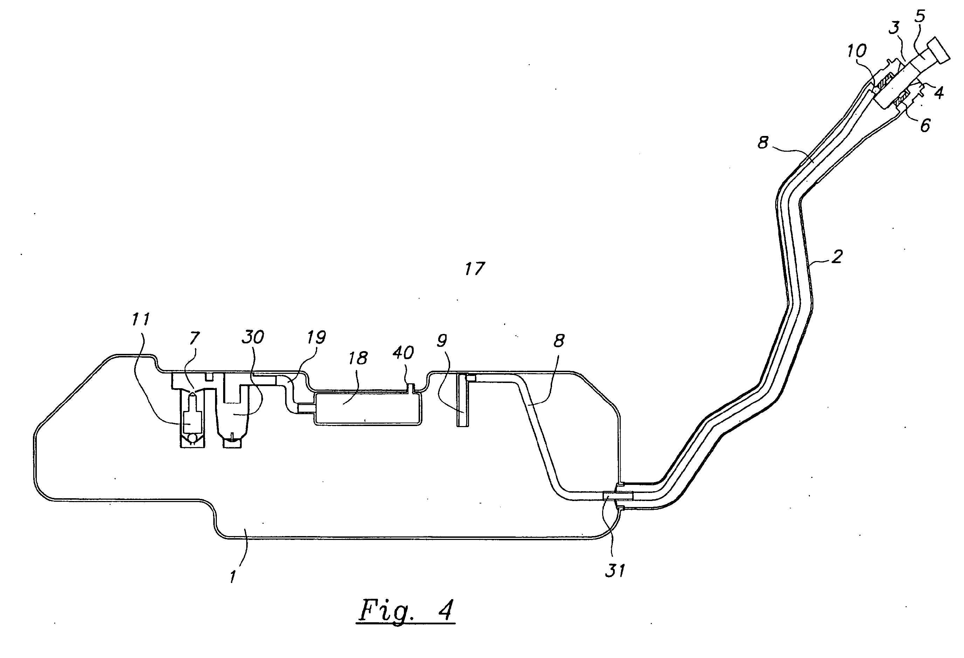

La figure 4 illustre un système à carburant plus global comprenant le haut de tubulure de remplissage (2), ainsi qu'un réservoir à carburant (1), un clapet (7) à flotteur (11), normalement ouvert, muni d'une capacité de piégeage de liquide (30) et un canister (18). Une canalisation (8) de respiration des vapeurs et de fixation du niveau maximum est séparée en deux parties qui aboutissent de part et d'autre d'un clapet anti-retour (31) destiné à éviter les sorties de liquide du réservoir (1) dans la tubulure (2). Dans le réservoir (1), la canalisation (8) se prolonge par un siphon qui se termine par un tronçon (9) plongeant dans le haut du réservoir et fixant le niveau maximum admissible de liquide.

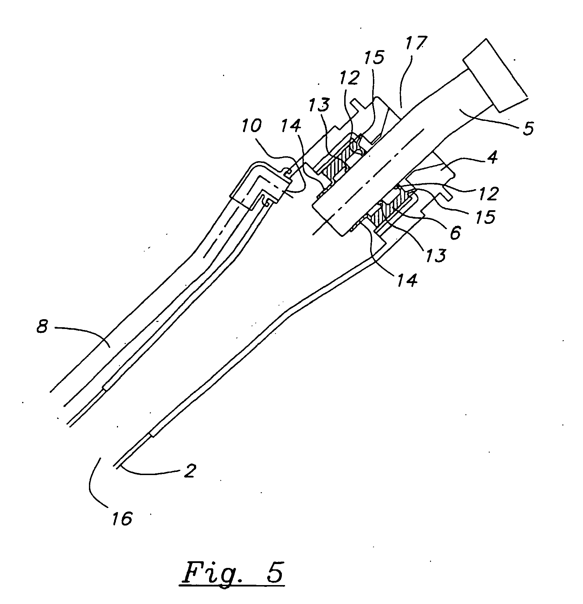

La figure 5 illustre une variante de haut de tubulure de remplissage (2) dans laquelle la canalisation (8) de respiration des vapeurs et de fixation du niveau maximum est située hors du volume de cette tubulure. Dans cette variante, la canalisation (8) demeure à l'extérieur du réservoir (non illustré) sur une majeure partie de sa longueur, pénètre dans la paroi supérieure de ce dernier et plonge dans le haut du volume intérieur jusqu'au niveau maximum admissible de liquide.

## Revendications

1. Guide (4) pour pistolet distributeur de carburant (5) inséré dans le haut d'une tubulure de remplissage (2) d'un réservoir à carburant (1), le guide (4) incorporant un dispositif d'étanchéité et de sécurité (6) en matériau élastomère souple pour le remplissage du réservoir (1) avec du carburant au moyen du pistolet (5), comprenant au moins un joint annulaire (12) destiné à entourer le pistolet (5) et à s'opposer à la sortie des gaz hors du réservoir (1), et au moins une soupape (15) qui n'est susceptible de s'ouvrir, en cas de surpression exagérée dans le réservoir (1), que vers l'atmosphère extérieure de manière à créer un passage permettant l'échappement de liquide et/ou de gaz de l'intérieur du réservoir (1) vers l'atmosphère extérieure (17), la soupape (15) étant située directement dans le guide (4), à proximité du pistolet (5) lorsque celui-ci est inséré dans le dispositif d'étanchéité et de sécurité (6), et la soupape (15) étant un clapet anti-retour indépendant du joint annulaire (12), **caractérisé en ce que** la soupape a la forme d'un parapluie renversé (74), **en ce qu'**elle est réalisée en matériau élastomère et **en ce qu'**elle est située en amont du joint annulaire (12).

2. Guide (4) selon la revendication 1, **caractérisé en ce que** le dispositif (6) comprend en outre, du côté du réservoir (1), un diaphragme (14) en matériau élastomère.

3. Guide (4) selon une quelconque des revendications précédentes, **caractérisé en ce qu'**il est réalisé en un matériau plastique rigide,

4. Système à carburant incorporant un guide (4) selon une quelconque des revendications 1 à 3 et comprenant un réservoir (1), un clapet (7) à flotteur (11) assurant le dégazage au remplissage et la mise à l'air en fonctionnement et une canalisation (8) de respiration des vapeurs et de fixation du niveau maximum du liquide dans le réservoir, reliant la partie haute de ce réservoir à la partie supérieure (10) de la tubulure de remplissage (2), en aval du dispositif d'étanchéité (6), du côté du réservoir (1); et dans lequel le clapet (7) est normalement ouvert pendant le remplissage du réservoir (1) comme pendant les périodes de fonctionnement et la ligne de flottaison du flotteur (11) est réglée pour que le clapet (7) ne soit fermé qu'en deux circonstances, à savoir lorsque le réservoir (1) est incliné au-delà d'une limite prédéterminée, voire complètement retourné et pendant un mouvement transitoire du carburant dont l'ampleur dépasse une valeur prédéterminé.

5. Système à carburant selon la revendication précédente, **caractérisé en ce que** la canalisation (8) de respiration des vapeurs qui relie la partie haute du réservoir (1) à la partie supérieure (10) de la tubulure de remplissage (2) est située en totalité à l'intérieur du volume du réservoir (1) et de celui de la tubulure de remplissage (2).

## Claims

1. Guide (4) for a fuel-delivery nozzle (5) inserted into the top of a filler neck (2) of a fuel tank (1), said guide incorporating a sealing and safety device (6) made from flexible elastomeric material for filling the tank (1) with fuel using the fuel-delivery nozzle (5), comprising at least one annular seal (12) for surrounding the nozzle (5) and preventing the exit of gases from the tank (1) and at least one valve (15) capable of opening, in the event of excess overpressure in the hollow body (1), only towards the external atmosphere so as to create a passage allowing the escape of liquid and/or of gas from the inside of the tank (1) towards said external atmosphere (17), the valve (15) being located directly inside the guide (4), close to the nozzle (5) when said nozzle is inserted in the sealing and safety device (6), and said valve (15) being a non-return flap valve, independent of the annular seal (12), **characterized in that** the valve (15) has the form of an inverted umbrella (74), **in that** said valve is made from elastomeric material and **in that** said valve is located up streams of the annular seal (12).

2. Guide (4) according to claim 1, **characterized in that** the device (6) also comprises, on the tank (1) side, a diaphragm (14) made from elastomeric material.

3. Guide (4) according to either of the preceding claims, **characterized in that** it is made from rigid plastic.

4. Fuel system incorporating a guide (4) according to either of claims 1 to 3 and comprising a tank (1), a flap valve (7) with float (11) for degassing during filling and venting to the air during operation and a pipe (8) for breathing of the vapours and for fixing the maximum liquid level in the tank, connecting the top part of this tank to the upper part (10) of the filler neck (2), downstream of the sealing device (6), on the tank (1) side, and in which the flap valve (7) is normally open during filling of the tank (1) and during periods of operation and the float line of the float (11) is adjusted so that the flap valve (7) is closed only in two circumstances, namely when the tank (1) is inclined beyond a predetermined limit, or even completely inverted, and during a transitory movement of the fuel whose extent exceeds a predetermined value.

5. Fuel system according to the preceding claim, **characterized in that** the breather pipe (8) for the vapours that connects the top part of the tank (1) to the upper part (10) of the filler neck (2) is located entirely inside the volume of the tank (1) and that of the filler neck (2).

## Patentansprüche

1. Führung (4) für eine Kraftstoff-Zapfpistole (5), die in den oberen Bereich eines Einfüllstutzens (2) eines Kraftstofftanks (1) eingeführt ist, wobei in die Führung (4) eine Dichtungs- und Sicherheitsvorrichtung (6) aus weichem Elastomermaterial zum Füllen des Tanks (1) mit Kraftstoff mittels der Pistole (5) eingefügt ist, die mindestens eine Ringdichtung (12), die dazu bestimmt ist, die Pistole (5) zu umgeben und dem Austritt der Gase aus dem Tank (1) entgegenzuwirken, und mindestens ein Ventil (15) enthält, das sich im Fall eines übermäßigen Überdrucks im Tank (1) nur in die Außenatmosphäre öffnen kann, um einen Durchgang zu erzeugen, der den Austritt von Flüssigkeit und/oder Gas aus dem Inneren des Tanks (1) in die Außenatomsphäre (17) erlaubt, wobei das Ventil (15) sich direkt in der Führung (4) in der Nähe der Pistole (5) befindet, wenn diese in die Dichtungs- und Sicherheitsvorrichtung (6) eingeführt ist, und das Ventil (15) ein von der Ringdichtung (12) unabhängiges Rückschlagventil ist, **dadurch gekennzeichnet, dass** das Ventil die Form eines umgedrehten Regenschirms (74) hat, dass es aus einem Elastomermaterial hergestellt ist, und dass es sich vor der Ringdichtung (12) befindet.

2. Führung (4) nach Anspruch 1, **dadurch gekennzeichnet, dass** die Vorrichtung (6) außerdem auf der Seite des Tanks (1) eine Membran (14) aus Elastomermaterial enthält.

3. Führung (4) nach einem der vorhergehenden Ansprüche, **dadurch gekennzeichnet, dass** sie aus einem steifen Kunststoff hergestellt ist.

4. Kraftstoffsystem, in das eine Führung (4) nach einem der Ansprüche 1 bis 3 eingefügt ist und das einen Tank (1), ein Ventil (7) mit Schwimmer (11), das die Entgasung beim Füllen und die Belüftung im Betrieb gewährleistet, und eine Atmungs-Rohrleitung (8) der Dämpfe und zur Festlegung des maximalen Flüssigkeitspegels im Tank enthält, die den oberen Bereich dieses Tanks mit dem oberen Bereich (10) des Einfüllstutzens (2) hinter der Dichtungsvorrichtung (6) auf der Seite des Tanks (1) verbindet, und bei dem das Ventil (7) während des Füllens des Tanks (1) sowie während der Betriebsperioden normalerweise offen und die Schwimmlinie des Schwimmers (11) so eingestellt ist, dass das Ventil (7) nur in zwei Situationen geschlossen ist, nämlich wenn der Tank (1) über eine vorbestimmte Grenze hinaus geneigt oder sogar vollständig umgedreht ist, und während einer Übergangsbewegung des Kraftstoffs, deren Ausmaß einen vorbestimmten Wert überschreitet.

5. Kraftstoffsystem nach dem vorhergehenden Anspruch, **dadurch gekennzeichnet, dass** die Atmungs-Rohrleitung (8) der Dämpfe, die den oberen Bereich des Tanks (1) mit dem oberen Bereich (10) des Einfüllstutzens (2) verbindet, sich vollständig innerhalb des Volumens des Tanks (1) und desjenigen des Einfüllstutzens (2) befindet.
